# EUROPÄISCHE PATENTSCHRIFT

(11) **EP 3 735 833 B1**
(45) Veröffentlichungstag und Bekanntmachung des Hinweises auf die Patenterteilung: **23.10.2024**
(21) Anmeldenummer: 19173611.5
(22) Anmeldetag: 09.05.2019
(51) Int. Cl.: A23C 9/00, A23C 9/142, A23C 9/152

(54) **HERSTELLUNG VON KONDENSMILCH MIT VERBESSERTEM GESCHMACK II**
PRODUCTION OF EVAPORATED MILK WITH IMPROVED TASTE II
FABRICATION DE LAIT CONDENSÉ AVEC GÔUT AMELIORÉ II

(43) Veröffentlichungstag der Anmeldung: 11.11.2020
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 0 435 822
- US-A- 5 503 865
- US-A1- 2007 166 447
- DATABASE GNPD [online] MINTEL; 29 June 2016 (2016-06-29), ANONYMOUS: "Condensed Milk", XP055615349, retrieved from www.gnpd.com Database accession no. 4108967
- DATABASE GNPD [online] MINTEL; 2 June 2011 (2011-06-02), ANONYMOUS: "Condensed Milk", XP055615375, retrieved from www.gnpd.com Database accession no. 1559807
- DATABASE GNPD [online] MINTEL; 4 March 2005 (2005-03-04), ANONYMOUS: "Condensed Milk", XP055615384, retrieved from www.gnpd.com Database accession no. 10209824
- VAN DER HORST H C ET AL: "Use of nanofiltration for concentration and demineralization in the dairy industry: Model for mass transport", JOURNAL OF MEMBRANE SCIENCE, ELSEVIER BV, NL, vol. 104, no. 3, 31 August 1995 (1995-08-31), pages 205 - 218, XP004041309, ISSN: 0376-7388, DOI: 10.1016/0376-7388(95)00041-A
- DONALD J MCMAHON ET AL: "Food Structure Effects of Phosphate and Citrate on the Gelation Properties of Casein Micelles in Renneted Ultra- High Temperature (UHT) Sterilized Concentrated Milk Recommended Citation", MILOSLAV FOOD STRUCTURE, 1 January 1991 (1991-01-01), XP055615553, Retrieved from the Internet <URL:https://pdfs.semanticscholar.org/e272/923421cda9a2692d9d17b26b5d9bf38b8251.pdf?_ga=2.249225920.672396372.1566894864-1114392784.1560426277>
- MOSHE ROSENBERG: "Current and future applications for membrane processes in the dairy industry", TRENDS IN FOOD SCIENCE & TECHNOLOGY, vol. 6, no. 1, 1 January 1995 (1995-01-01), pages 12 - 19, XP055197852, ISSN: 0924-2244, DOI: 10.1016/S0924-2244(00)88912-8
- PAVAN KUMAR ET AL: "Perspective of Membrane Technology in Dairy Industry: A Review", ASIAN-AUSTRALASIAN JOURNAL OF ANIMAL SCIENCES., vol. 26, no. 9, 1 September 2013 (2013-09-01), KR, pages 1347 - 1358, XP055329545, ISSN: 1011-2367, DOI: 10.5713/ajas.2013.13082
- V.C. STEBNITZ ET AL: "The Age Thickening of Sweetened Condensed Milk", JOURNAL OF DAIRY SCIENCE., vol. 19, no. 2, 1 February 1936 (1936-02-01), US, pages 101 - 115, XP055615850, ISSN: 0022-0302, DOI: 10.3168/jds.S0022-0302(36)93042-4

## Beschreibung

### GEBIET DER ERFINDUNG

Die Erfindung befindet sich auf dem Gebiet der Milchindustrie und betrifft ein Verfahren zur Herstellung einer Kondensmilch mit verbessertem Geschmack.

### TECHNOLOGISCHER HINTERGRUND

Kondensmilch oder evaporierte Kondensmilch, die man auch als Dosenmilch oder Büchsenmilch bezeichnet, wird aus Milch durch Reduktion des Wassergehaltes erhalten. Sie wurde ab der Mitte des 19. Jahrhunderts als Konserve hergestellt und vertrieben, da frische Milch nur kurze Zeit gelagert werden konnte. Das ursprüngliche Herstellungsverfahren beinhaltete die Zuführung von bis zu 45 % Zucker nach dem eigentlichen Kondensierungsvorgang, wodurch die sehr dickflüssige gezuckerte Kondensmilch entstand. 30 Jahre danach gelang die industrielle Herstellung ungezuckerter, ebenfalls haltbarer Kondensmilch, die bis heute vor allem als Zugabe in Filterkaffee beliebt ist.

In der Regel wir die Milch zur Keimabtötung und Albuminstabilisierung für 10 bis 25 Minuten auf 85 bis 100 °C erhitzt und anschließend bei Unterdruck und 40 bis 80 °C eingedickt, wobei rund 60 % des Wassers entzogen werden. Danach hat sie einen Fettgehalt von etwa 4 bis 10 % und eine fettfreie Trockenmasse von etwa 23 %. Nach der Homogenisierung wird sie in Dosen, Flaschen, Getränkekartons oder Plastikportionspackungen abgefüllt und zur Verlängerung der Haltbarkeit noch einmal sterilisiert.

Bei der gezuckerten Variante wird nach dem Wasserentzug bis zu einer Konzentration von 45 % Zucker hinzugegeben, was ursprünglich zur Verhinderung des Bakterienwachstums notwendig war. Anschließend wird die gesüßte Kondensmilch gekühlt.

Im Verlauf des Herstellungsverfahrens, beispielsweise nach der Homogenisierung, wir dem Produkt typischerweise ein Hydrokolloid und ein Puffer zugesetzt. Das Hydrokolloid erhöht die Viskosität; durch den Puffer wird Calcium absorbiert und Kalium freigesetzt, der pH-Wert leicht reduziert und konsequenterweise die Viskosität erhöht. Zusammenfassend lässt sich feststellen, dass die enthaltenen Proteine aufquellen und das enthaltene Calcium in Form von löslichen Calciumproteinkomplexen bindet. Von Nachteil ist jedoch, dass Hydrokolloide wie insbesondere Carrageen bei Raumtemperatur, insbesondere Temperaturen von etwa 30 °C zur Gellbildung und damzufolge zu Klumpenbildung bei Lagerung neigen.

Außerdem wird das Löslichkeitsprodukt der Calciumproteinkomplexen leicht überschritten, worauf diese ausfallen und sedimentieren. Obwohl dieser Effekt an sich keinen Einfluss auf den Geschmack hat und das Sediment durch Umrühren rasch wieder aufgelöst wird, assoziiert der Verbraucher doch damit eine minderwertige Produktqualität oder glaubt sogar, das Produkt sei verdorben.

### RELEVANTER STAND DER TECHNIK

Gegenstand der EP 0433474 B1 (NESTLE) ist ein Verfahren zur Herstellung einer stabilisierten Kondensmilch, bei dem man Vollmilch oder Magermilch ein Lactoseprodukt mit einem Gehalt an Phospholipiden zusetzt. Die so versetzte Milch wird wärmebehandelt, aufkonzentriert, homogenisiert und pasteurisiert. Die Stabilisierung betrifft jedoch nicht das Aufrahmen, außerdem ist der Zusatz dieser Additive in der Anwendung zu teuer, erhöht die Süße des Produktes erheblich und führt Laktose ein, wo dieser Stoff vielfach nicht erwünscht ist.

Aus der EP 0517941 B1 (NESTLE) ist ein weiteres Verfahren zur Herstellung von Kondensmilch bekannt. Dabei wird eine Standardmilch in zwei Ströme aufgeteilt, von denen jedoch nur einer homogenisiert wird. Anschließend wird dieser mit dem zweiten nicht homogenisierten Strom wie vermischt. Die Mischung wird anschließend wärmebehandelt, konzentriert, homogenisiert und abschließend sterilisiert.

Gegenstand der EP 627169 B1 (FRIESLAND) ist ein Verfahren zur Herstellung von Kondensmilch, bei dem man wiederum eine Standardmilch zunächst bei 50 bis 100 °C wärmebehandelt, dann homogenisiert und ein weiteres Mal erhitzt. Anschließend erfolgt das Eindampfen und Sterilisieren.

Das Dokument US 5 503 865 A (NESTEC SA) betrifft ein Verfahren zur Herstellung einer Milchzusammensetzung; das Verfahren zeichnet sich dadurch aus, dass man eine entrahmte Milch durch Ultrafiltration oder Mikrofiltration auf ein Drittel bis ein Sechstel des Volumens konzentriert und dass man im Retentat eine Lactosemenge löst, die, bezogen auf das Gewicht, ungefähr der Trockenmassemenge des Retentats entspricht.

Schließlich wird in der EP 1209980 B1 (NESTEC) beschrieben, wie man durch Zugabe von Molke zu Rohmilch über die genannten Zwischenschritte ebenfalls eine Kondensmilch erhält, die kostengünstiger in der Herstellung ist, aber keine geschmacklichen Defizite aufweist.

### AUFGABE DER ERFINDUNG

Die Aufgabe der vorliegenden Erfindung hat daher darin bestanden, ein Verfahren zur Herstellung einer Kondensmilch zur Verfügung zu stellen, welches frei von den oben geschilderten Nachteilen ist. Insbesondere sollte die Milch geschmacklich verbessert sein und nach Möglichkeit zusätzlich auch noch über längere Zeit und bei niedrigen Temperaturen lagerstabil und insbesondere frei von Aufrahmungen und Sedimentation sein.

### BESCHREIBUNG DER ERFINDUNG

Gegenstand der Erfindung ist ein Verfahren zur Herstellung von Kondensmilch mit verbessertem Geschmack, bestehend aus oder umfassend die folgenden Schritte:
(a) Bereitstellung einer Rohmilch oder Vollmilch;
(b) Abtrennung des Rahms von der Vollmilch in an sich bekannter Weise unter Erhalt einer Magermilch- und einer Rahmfraktion;
(c) Nanofiltration der Magermilchfraktion aus Schritt (b) unter Erhalt eines mineralreichen Permeates P1 und eines teildemineralisierten und proteinreiches Retentates R1, wobei die Nanofiltration mit Membranen, die einen mittleren Porendurchmesservon etwa 500 bis etwa 1.000 Dalton aufweisen, und bei einer Temperatur im Bereich von etwa 6 bis etwa 20 °C durgeführt wird;
(d) Versetzen des Retentates R1 aus Schritt (c) mit wenigstens einem Teil der Rahmfraktion aus Schritt (b);
(e) Entwässern der Mischung aus Schritt (d) unter Erhalt eines Konzentrats;
(f) Versetzen des Konzentrates aus Schritt (e) mit einem Puffer unter Erhalt einer Mischung, wobei der Puffer aus Natriumdihydrogenphosphat und Natriumcitrat im molaren Verhältnis von etwa 40:60 bis etwa 60:40 besteht;
(g) Homogenisierung der Mischung aus Schritt (f) unter Erhalt eines Homogenisats; und
(h) Pasteurisieren des Homogenisats aus Schritt (g).

Überraschenderweise wurde gefunden, dass ein Puffersystems aus Natriumdihydrogenphosphat und Natriumcitrat, neben der Puffer- auch eine Quellwirkung erzielt wird. Insbesondere durch die Verwendung von Natriumcitrat wurde eine Verbesserung der geschmacklichen Eigenschaften des Endproduktes festgestellt werden, sowie eine Reduktion der Konzentration von Natrium und eine Erhöhung der Proteinstabilität. Die Mitverwendung von nachteiligen Hydrokolloiden, wie insbesondere Carrageen ist daher nicht mehr erforderlich oder kann zumindest ganz erheblich eingeschränkt werden. Insbesondere bei Verwendung von Natriumcitrat wird auch noch ein zusätzlicher Frischegeschmack eingebracht.

Durch das Einfügen eines Nanofiltrationsschrittes und Abtrennung von Mineralien wird zudem das Löslichkeitsprodukt der Calciumproteinkomplexe soweit verschoben, dass diese zuverlässig auch bei längerer Lagerung und tieferen Temperaturen in Lösung bleiben. Die geschmackliche Qualität der Produkte bleibt dabei unverändert.

### SEPARATION

Unter Separation wird die Abtrennung des Rahms bis auf einen Fettanteil von etwa 0,05 Gew.-% in der Magermilch sowie die Entfernung von nicht Milch-Bestandteilen verstanden. Das Verfahren kann sowohl in der Wärme bei einer Temperatur im Bereich von etwa 20 bis etwa 60 °C oder in der Kälte bei einer Temperatur von etwa 8 bis etwa 18 °C durchgeführt werden.

Im erfindungsgemäßen Verfahren ist es von Vorteil, die Separation kalt durchzuführen. Dabei ist es vorteilhaft, wenn die Temperatur des kalten Zustandes der Rohmilch durch Wärmeaustausch mit einem Wärmeträgermedium auf einen für ihre Separation optimalen Wert eingestellt wird. Normalerweise steht die Rohmilch in einem gekühlten Zustand zur Verfügung, dessen Temperatur nicht dem Wert entspricht, bei dem ihre Kaltseparation am wirkungsvollsten und für das Milchfett (Rahm) am schonendsten betrieben werden kann. Deshalb wird sie durch den Wärmeaustausch auf den für ihre Separation optimalen Wert eingestellt. Die dabei anfallende Austauschkälte kann insbesondere durch eine sogenannte Wärmeschaukel anderen Prozessen, die innerhalb eines Molkereibetriebs ablaufen, zur Verfügung gestellt werden. Beispielsweise ist die Temperatur der gekühlten Rohmilch nicht höher als 6 °C, während die für die Kaltseparation optimale Temperatur im Bereich von 8 bis 18 °C und insbesondere 8 bis 12 °C liegt. In diesem Fall erfolgt der Wärmeaustausch durch Anwärmen der Rohmilch, damit die Temperatur ihres kalten Zustandes auf einen in diesem Bereich liegenden Wert angehoben wird. Normalerweise liegt in Molkereibetrieben ein Wärmeüberschuss vor. Deshalb kann als Wärmeträgermedium für das Anwärmen Niedrigtemperaturwasser, das in Prozessen des Molkereibetriebes anfällt, verwendet werden. Dieses Niedrigtemperaturwasser wird dem Wärmeaustauschprozess mit einer Temperatur, die beispielsweise im Bereich von 35 °C liegt, zugeführt und kühlt sich durch den Wärmeaustausch auf eine Temperatur, die beispielsweise im Bereich von 11 bis 15 °C liegt, ab. Dadurch stellt das erfindungsgemäße Verfahren eine wichtige Kältequelle für Prozesse des Molkereibetriebs zur Verfügung.

Wird die Separation in der Wärme durchgeführt, liegt die bevorzugte Temperatur im Bereich von etwa 45 bis etwa 60 °C, vorzugsweise im Bereich von etwa 50 bis 55 °C.

Die Abtrennung von Feststoffen sowie die Entrahmung des Fettanteils von etwa 4 Gew.-% erfolgen üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die Feststoffabtrennung einzeln oder gemeinsam durchgeführt werden können (http://www.westfalia-separator.com/de/anwendungen/molkereitechnik/milch-molke.html). Bevorzugte Kaltmilchseparatoren werden von diesem Hersteller unter der Bezeichnung "Procool" angeboten. Entsprechende Bauteile sind beispielsweise auch in der DE 10036085 C1 und der DE 10361526 B3 (Westfalia) beschrieben und dem Fachmann bestens bekannt, so dass es zur Durchführung dieser Verfahrensschritte keiner Erläuterungen bedarf, da sie dem allgemeinen Fachwissen zuzurechnen sind.

Vorzugsweise erfolgt die Abtrennung der Rahmfraktion in einem Plattenwärmeaustauscher mit angeschlossenem Separator vornimmt.

### NANOFILTRATION

Die Nanofiltration stellt ein Filtrationsverfahren aus dem Bereich der Membrantechnik dar, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 10 und 80 bar liegt.

Im Sinne der Erfindung wird ein Permeat P1 erhalten, welches mineralreich ist und vor allem Natrium- und Kaliumionen enthält. Das Retentat R1 ist mineralarm und proteinreich und wird im verfahren weiterverwendet.

Die Ausschlussgrenzen von Ultra- und Nanofiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Die Nanofiltration wird mit Membranen, die einen mittleren Porendurchmesser im Bereich von etwa 500 bis 1.000 Dalton aufweisen, und bei einer Temperatur im Bereich von etwa 6 bis etwa 20 °C durgeführt.

Der Werkstoff der Filterfläche kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die zweite für die Nanofiltration besonders bevorzugt erwiesen hat.

### STANDARDISIERUNG

Unter Standardisierung ist zu verstehen, dass dem Retentat R1 so viel von dem zuvor abgetrennten Rahm zugesetzt wird, wie dies aus anwendungstechnischer Sicht oder durch Normen vorgegeben erforderlich ist. Üblicherweise wird eine solche Menge zugesetzt, so dass das Endprodukt 2-12 Gew.-% fettfreie Trockenmasse und zwischen 3 und 5 Gew.-% und insbesondere etwa 4 Gew.-% Fett in der Trockenmasse aufweist.

### KONZENTRIERUNG

Die wie oben beschrieben erhaltene Standardmilch wird entwässert. Die Entwässerung erfolgt vorzugsweise in so genannten "Fallfilmverdampfern". Üblicherweise wird die Standardmilch so aufkonzentriert, dass etwa 15 bis etwa 25 Gew.-% und insbesondere etwa 18 Gew.-% fettfreie Trockenmasse vorliegen.

### PUFFERUNG

Nach dem Eindampfen werden dem Konzentrat Additive zugegeben, die die Aufgabe haben, das enthaltene Calcium vor dem Ausflocken zu bewahren. Dazu nutzt man insbesondere Puffer, die Calcium absorbieren und Kalium freisetzen, den pH-Wert leicht reduzieren und konsequenterweise die Viskosität erhöhen; die Puffer lassen Proteine aufquellen und dann wasserlösliche Calciumproteinkomplexe bilden.

Im Sinne der Erfindung wird mit Puffersysteme aus Natriumdihydrogenphosphat und Natriumcitrat gearbeitet. Die konkrete Pufferauswahl der vorliegenden Erfindung hat gegenüber anderen Puffersystemen, insbesondere gegenüber dem sonst üblichen Carbonatpuffer, den Vorteil, dass es ähnlich wie beim Einsatz von Hydrokolloiden zusätzlich zu einem Aufquellen der Proteine kommt, die dann lösliche Calciumproteinkomplexe bilden. Daher kann im Sinne der Erfindung auf den sonst erforderlichen Einsatz besagter Hydrokolloide im Allgemeinen und von Carrageen im Besonderen ganz oder zumindest ganz überwiegend verzichtet werden, und somit das Problem der Klumpenbildung vermieden werden.

insbesondere die Mitverwendung von Natriumcitrat bringt einen weiteren Vorteil mit, da der Milch auf diese Weise noch eine frische und fruchtige Note verliehen wird. Die beiden Komponenten werden üblicherweise im molaren Verhältnis von etwa 40:60 bis etwa 60:40 und besonders bevorzugt von etwa 50:50 eingesetzt. In der Regel setzt man dazu möglichst konzentrierte wässrige Lösungen mit Feststoffgehalten im Bereich von etwa 30 bis etwa 50 Gew.-% ein. Dabei können die beiden Komponenten getrennt oder gemeinsam zugesetzt werden.

Insbesondere durch die Verwendung von Natriumcitrat wurde eine Verbesserung der geschmacklichen Eigenschaften des Endproduktes festgestellt werden, sowie eine Reduktion der Konzentration von Natrium und eine Erhöhung der Proteinstabilität.

Die Einsatzmenge an Gesamtpuffer kann jeweils etwa 0,01 bis etwa 0,5 Gew.-%, vorzugsweise etwa 0,02 bis etwa 0,3 Gew.-% und insbesondere etwa 0,05 bis etwa 0,1 Gew.-% - jeweils bezogen auf das Konzentrat - betragen.

Wie erläutert ist die Mitverwendung von Carrageen durch das neue Puffersystem nicht mehr erforderlich; die bevorzugten Kondensmilchprodukte sind daher frei von Hydrokolloiden bzw. frei von Carrageen. "Frei" bedeutet dabei, dass der Gehalt an diesen Stoffen unter 0,01 Gew.-% bezogen auf die Kondensmilch liegt.

Sollte sich im Einzelfall doch herausstellen, dass ein stärkeres Quellvermögen vorteilhaft wäre, kann den Konzentraten Hydrokolloid in geringen Mengen zugesetzt werden. Als geringe Menge wird eine solche angesehen, die allenfalls 10 Gew.-% bezogen auf die Gesamtmenge auf Puffer (berechnet als Feststoff) ausmacht. Beispiele für geeignete Hydrokolloide, die natürlich für den Verzehr zugelassen sind, umfassen Stärkemehle, Cellulose, Pektine, Gummi Arabicum, Guarkernmehl, Agar, Alginate, Xanthan, Dextran und insbesondere Carrageen (E 407).

Auch wenn die Pufferung üblicherweise auf der Stufe der Konzentrate erfolgt, kann diese grundsätzlich auch an einer anderen Stelle des Verfahrens, beispielsweise nach der Homogenisierung erfolgen.

### HOMOGENISIERUNG UND PASTEURISIERUNG

Die Homogenisierung der Zwischenprodukte kann in an sich bekannter Weise in Rührkesseln erfolgen. Die Homogenisierzeit beträgt zwischen 1 und 30 Minuten.

Anschließend werden die Homogenisate einer Kurzzeit-Hochtemperaturbehandlung unterworfen und dabei pasteurisiert. Typisch sind Bedingungen von etwa 1 bis etwa 7 Minuten bei 120 bis 125 °C. Bevorzugt ist eine Erhitzung über 3-6 Minuten auf 121 °C.

Die Ultrahocherhitzung kann beispielsweise durch Direct Steam Injection (DSI) erfolgen. Dies hat den Vorteil, dass das langsame Durchlaufen eines Temperaturbereiches, in dem mesophile und thermophile Sporen optimale Wachstumsbedingungen vorfinden, durch eine blitzartige Erwärmung signifikant verkürzt wird. Dies wird durch die direkte Einspritzung von heißem oder sogar überhitztem Wasserdampf erreicht, der eine Temperatur von 100 bis etwa 250 °C aufweisen kann. Üblicherweise erfolgt dies mit Hilfe von Düsen, die entweder direkt in das Produkt eintauchen oder in einer Ableitung des Wärmeaustauschers eingebaut sind.

Das Prinzip von DSI besteht darin, dass ein unter Druck stehender hocherhitzter Wasserdampfstrahl in eine Düsenkammer geleitet wird und sich dann durch ein perforiertes Rohr ("Radial Steam Jet Diffuser") in das zu erhitzende flüssige Produkt entspannt. Der Hochdruckstrom erzeugt ein sich mit hoher Geschwindigkeit ausbreitendes radiales Wärmeaustauschfeld, wodurch eine gleichmäßige Erhitzung des Produktes in sehr kurzen Zeiten erreicht wird.

Alternativ kann man das Produkt auch durch (Dampf-)Infusion pasteurisiert. Dieses Verfahren ist seit den 1960er Jahren bekannt. Grundsätzlich kann die Erwärmung in zwei Schritten durchgeführt werden, wobei das zu erhitzende Gut in eine mit Heißdampf gefüllte Druckkammer eingedüst wird und die Erwärmung bzw. Pasteurisierung auf dem Fallweg der Tröpfchen erfolgt. Seit dem Jahr 2000 hat indes der so genannte PDX-Prozess an Bedeutung gewonnen. Dabei wird das zu erwärmende Gut vaporisiert und in einem Strom überhitzten Wasserdampfs schlagartig erwärmt. Der sich mit Überschallgeschwindigkeit vorwärtsbewegende Dampfstrom verteilt die Produkttröpfchen homogen, so dass ein Mehrphasenstrom entsteht, wobei die Erhitzung schonend nur an den Grenzflächen der Tröpfchen stattfindet. Auf diese Weise gleichzeitig wird eine Kondensation der Tröpfchen bewirkt. Der Wasserdampf kann dabei eine Temperatur von etwa 100 bis etwa 250 °C und insbesondere etwa 120 bis etwa 150 °C aufweisen, die Infusion benötigt eine Zeit von typisch 1 bis 5 und insbesondere etwa 2 bis 3 Sekunden.

Nach der Pasteurisierung wird die so erhaltene Kondensmilch steril abgefüllt. Falls gewünscht können die Verpackungen dann ein weiteres Mal erhitzt werden, um die Lagerzeit zu verlängern. Grundsätzlich ist es auch möglich, die Pasteurisierung selbst erst mit der verpackten Ware vorzunehmen, was insbesondere dann möglich ist, wenn es sich bei den Verpackungen um Glasflaschen oder Konserven handelt.

Schließlich kann das gesamte Verfahren batchweise oder kontinuierlich betrieben werden. Ebenfalls ist es möglich, die Verfahrensweisen zu mischen, also beispielsweise die Schritte (a) bis (d) batchweise zu gestalten und die Schritte (e) bis (h) dann kontinuierlich zu gestalten.

### BEISPIELE

### VERGLEICHSBEISPIEL 1

### Herstellung von Kondensmilch (konventionell)

5.000 l Rohmilch wurden bei 55 °C kontinuierlich über eine Kombination aus Plattenwärmeaustauscher und Separator geleitet und dabei entstaubt und entrahmt. Die resultierende Magermilch wurde unter Zugabe eines Teils des zuvor abgetrennten Rahms auf einen Fettgehalt von 2 Gew.-% in der Trockenmasse eingestellt. Die so standardisierte Milch wurde in einen Fallfilmverdampfer entwässert, bis ein Gehalt von 18 Gew.-% fettfreie Trockenmasse und 4 gew.-% Fett erreicht war. Danach wurde dem Konzentrat 0,5 kg einer 10 Gew-% wässrigen Carrageenlösung und 1,5 kg einer 35 Gew.-%igen Phosphatpufferlösung zugegeben, so dass sich ein pH-Wert von etwa 6,4 einstellte. Anschließend wurde die Mischung 30 Minuten in einem Rührkessel homogenisiert und dann einer Kurzzeiterhitzung (3 Minuten, 121 °C) unterworfen, bevor das so pasteurisierte Produkt unter sterilen Bedingungen in Glasflaschen abgefüllt wurde.

### BEISPIEL 1

Vergleichsbeispiel V1 wurde wiederholt, jedoch auf den Einsatz von Carrageen verzichtet und statt der 1,5 kg einer 35 Gew.-%igen Phosphatpufferlösung 2,0 kg einer 35 Gew.-%igen Pufferlösung zugegeben, die sich molar 1:1 aus Natriumdihydrogenphosphat und Natriumcitrat zusammensetzte.

### BEISPIEL 2

5.000 l Rohmilch wurden bei 55 °C kontinuierlich über eine Kombination aus Plattenwärmeaustauscher und Separator geleitet und dabei entstaubt und entrahmt. Die resultierende Magermilch wurde bei 20 °C einer Nanofiltration unter Einsatz einer Keramikmembran mit einer mittleren Porenweite von 1.000 Dalton unterworfen. Das mineralreiche Permeat wurde abgeführt und das teildemineralisierte und proteinreiche Retentat unter Zugabe eines Teils des zuvor abgetrennten Rahms auf einen Fettgehalt von 2 Gew.-% in der Trockenmasse eingestellt. Die so standardisierte Milch wurde in einen Fallfilmverdampfer entwässert, bis ein Gehalt von 18 Gew.-% fettfreie Trockenmasse und 4 Gew.-% Fett erreicht war. Danach wurde dem Konzentrat 2,0 kg einer 35 Gew.-%igen Pufferlösung zugegeben, die sich molar 1:1 aus Natriumdihydrogenphosphat und Natriumcitrat zusammensetzte, zugegeben, so dass sich ein pH-Wert von etwa 6,4 einstellte. Anschließend wurde die Mischung 30 Minuten in einem Rührkessel homogenisiert und dann einer Kurzzeiterhitzung (3 Minuten, 121 °C) unterworfen, bevor das so pasteurisierte Produkt unter sterilen Bedingungen in Glasflaschen abgefüllt wurde.

### ANWENDUNGSTECHNISCHE BEURTEILUNG

Alle Muster wurden einem sogenannten Stresstest unterworfen, bei dem die Produkte unter drastischen Bedingungen gelagert wurden, um die Effizienz des erfindungsgemäßen Verfahrens und der erfindungsgemäßen Produkte deutlich zu demonstrieren. Demzufolge wurden beide Muster 8 Wochen bei 30°C. Demzufolge wurden alle Muster 8 Wochen bei 30 °C gelagert und anschließend bezüglich des optischen Eindrucks und des Geschmacks von 5 geschulten Testern beurteilt. Die Mittelwerte der Beurteilungen sind in **Tabelle 1** zusammengefasst. Dabei bedeutet von 1 nach 5 aufsteigend ein Zunehmen der Aufrahmung bzw. von einer zunehmenden Übereinstimmung mit dem Geschmack von Magermilch.

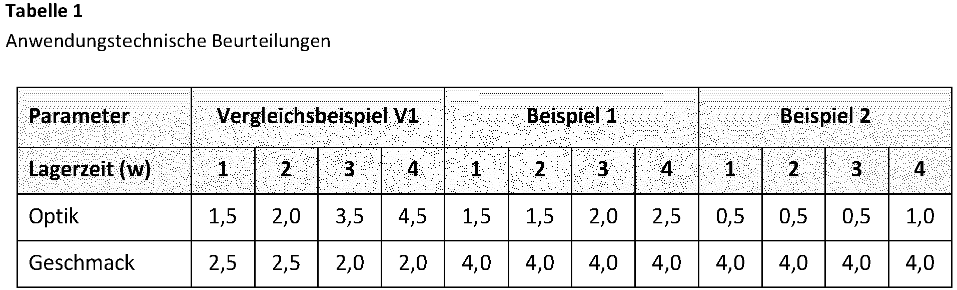

Die Befunde zeigen, dass das Vergleichsprodukt schon nach kurzer Zeit aufrahmt und seinen Milchgeschmack verliert, während das erfindungsgemäße Produkt über die gesamte Lagerzeit praktisch unverändert bleibt und dabei einen deutlicheren und stabileren Milchgeschmack besitzt. Durch Vorschalten einer Nanofiltration wird zudem die Stabilität noch einmal nachhaltig verbessert.

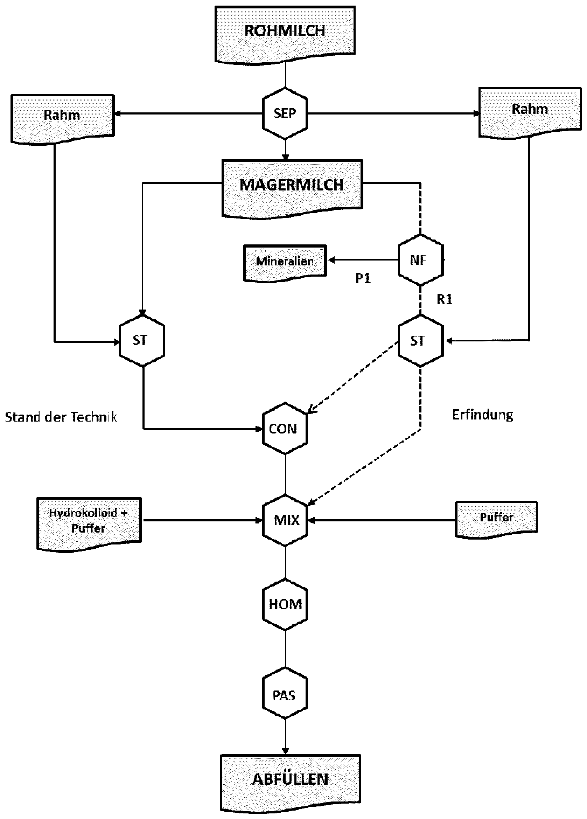

Die Erfindung wird an Hand des Schemas in der **Abbildung 1** noch einmal verdeutlich; der linke Ast zeigt den Stand der Technik, der rechte das erfindungsgemäße Verfahren in seiner bevorzugten Ausführungsform mit vorgeschalteter Nanofiltration. Die Abkürzungen bedeuten:
- SEP :: Separation
- NF :: Nanofiltration
- ST :: Standardisierung
- CON :: Konzentration
- MIX :: Vermischung
- HOM :: Homogenisierung
- PAS :: Pasteurisierung

## Patentansprüche

1. Verfahren zur Herstellung von Kondensmilch mit verbessertem Geschmack, bestehend aus oder umfassend die folgenden Schritte:
(a) Bereitstellung einer Rohmilch oder Vollmilch;
(b) Abtrennung des Rahms von der Vollmilch in an sich bekannter Weise unter Erhalt einer Magermilch- und einer Rahmfraktion;
(c) Nanofiltration der Magermilchfraktion aus Schritt (b) unter Erhalt eines mineralreichen Permeates P1 und eines teildemineralisierten und proteinreiches Retentates R1, wobei die Nanofiltration mit Membranen, die einen mittleren Porendurchmesser von etwa 500 bis etwa 1.000 Dalton aufweisen, und bei einer Temperatur im Bereich von etwa 6 bis etwa 20 °C durgeführt wird;
(d) Versetzen des Retentates R1 aus Schritt (c) mit wenigstens einem Teil der Rahmfraktion aus Schritt (b);
(e) Entwässern der Mischung aus Schritt (d) unter Erhalt eines Konzentrats;
(f) Versetzen des Konzentrates aus Schritt (e) mit einem Puffer unter Erhalt einer Mischung, wobei der Puffer aus Natriumdihydrogenphosphat und Natriumcitrat im molaren Verhältnis von etwa 40:60 bis etwa 60:40 besteht;
(g) Homogenisierung der Mischung aus Schritt (f) unter Erhalt eines Homogenisats; und
(h) Pasteurisieren des Homogenisats aus Schritt (g).

2. Verfahren nach Anspruch 1, **dadurch gekennzeichnet, dass** man die Abtrennung der Rahmfraktion in einem Plattenwärmeaustauscher mit angeschlossenem Separator vornimmt.

3. Verfahren nach mindestens einem der Ansprüche 1 bis 2, **dadurch gekennzeichnet, dass** man eine Keramikmembran einsetzt.

4. Verfahren nach mindestens einem der Ansprüche 1 bis 3, **dadurch gekennzeichnet, dass** man dem Retentat R1 eine solche Menge Rahm zusetzt, dass das Endprodukt 2-12 Gew.-% fettfreie Trockenmasse und zwischen 3 und 5 Gew.-% und insbesondere etwa 4 Gew.-% Fett in der Trockenmasse aufweist.

5. Verfahren nach mindestens einem der Ansprüche 1 bis 4, **dadurch gekennzeichnet, dass** man das Produkt aufkonzentriert, so dass etwa 15 bis etwa 25 Gew.-% fettfreie Trockenmasse vorliegen.

6. Verfahren nach mindestens einem der Ansprüche 1 bis 5, **dadurch gekennzeichnet, dass** man den Puffer in Mengen von jeweils etwa 0,01 bis etwa 0,5 Gew.-% zusetzt.

7. Verfahren nach mindestens einem der Ansprüche 1 bis 6, **dadurch gekennzeichnet, dass** man die Homogenisate über einen Zeitraum von etwa 1 bis etwa 7 Minuten auf 120 bis 125 °C erhitzt und dabei pasteurisiert.

8. Verfahren nach mindestens einem der Ansprüche 1 bis 7, **dadurch gekennzeichnet, dass** man die Kondensmilch nach der Pasteurisierung steril abfüllt und die verpackte Ware gegebenenfalls ein weiteres Mal erhitzt.

9. Verfahren nach mindestens einem der Ansprüche 1 bis 8, **dadurch gekennzeichnet, dass** man es batchweise oder ganz oder teilweise kontinuierlich betreibt.

## Claims

1. A process for the preparation of condensed milk with improved taste, consisting of or comprising the following steps:
(a) providing a raw milk or whole milk;
(b) separating the cream from the whole milk in a manner known per se to obtain a skim milk fraction and a cream fraction;
(c) nanofiltration of the skim milk fraction from step (b) to obtain a mineral-rich permeate P1 and a partially mineralized and protein-rich retentate R1, the nanofiltration being carried out with membranes having an average pore diameter of about 500 to about 1,000 Daltons and at a temperature in the range from about 6 to about 20°C;
(d) admixing the retentate R1 from step (c) with at least a portion of the cream fraction from step (b);
(e) dewatering the mixture from step (d) to obtain a concentrate;
(f) adding a buffer to the concentrate from step (e) to obtain a mixture, wherein the buffer consists of sodium dihydrogen phosphate and sodium citrate in a molar ratio of about 40:60 to about 60:40;
(g) homogenizing the mixture of step (f) to obtain a homogenate; and
(h) pasteurizing the homogenate from step (g).

2. The process according to claim 1, **characterized in that** the separation of the cream fraction is carried out in a plate heat exchanger with a connected separator.

3. The process according to at least one of claims 1 to 2, **characterized in that** a ceramic membrane is used.

4. The process according to at least one of claims 1 to 3, **characterized in that** such an amount of cream is added to the retentate R1 that the end product has 2-12% by weight of fat-free dry matter and between 3 and 5% by weight and in particular about 4% by weight of fat in the dry matter.

5. The process according to at least one of claims 1 to 4, **characterized in that** the product is concentrated so that about 15 to about 25% by weight of fat-free dry matter is present.

6. The process according to at least one of claims 1 to 5, **characterized in that** the buffer is added in quantities of about 0.01 to about 0.5% by weight in each case.

7. The process according to at least one of claims 1 to 6, **characterized in that** the homogenized products are heated to 120 to 125°C for a period of about 1 to about 7 minutes and pasteurized in the process.

8. The process according to at least one of claims 1 to 7, **characterized in that** the condensed milk is sterilely filled after pasteurization and the packaged product is heated a further time if necessary.

9. The process according to at least one of claims 1 to 8, **characterized in that** it is operated batchwise or continuously in whole or in part.

## Revendications

1. Procédé de préparation de lait concentré au goût amélioré, consistant en ou comprenant les étapes suivantes:
(a) fourniture d'un lait cru ou entier;
(b) séparation de la crème du lait entier d'une manière connue en soi pour obtenir une fraction de lait écrémé et une fraction de crème;
(c) nanofiltration de la fraction de lait écrémé de l'étape (b) pour obtenir un perméat riche en minéraux P1 et un rétentat R1 partiellement déminéralisé et riche en protéines, la nanofiltration étant effectuée avec des membranes qui présentent un diamètre moyen de pores d'environ 500 à environ 1000 daltons et à une température dans la plage d'environ 6 à environ 20°C ;
(d) mélanger du rétentat R1 de l'étape (c) avec au moins une partie de la fraction de crème de l'étape (b) ;
(e) déshydrater le mélange de l'étape (d) pour obtenir un concentré ;
(f) ajouter d'un tampon au concentré de l'étape (e) pour obtenir un mélange, le tampon étant constitué de dihydrogénophosphate de sodium et de citrate de sodium dans un rapport molaire d'environ 40:60 à environ 60:40 ;
(g) homogénéiser le mélange de l'étape (f) pour obtenir un homogénat; et
(h) pasteurisation de l'homogénéisât de l'étape (g).

2. Le procédé selon la revendication 1, **caractérisé en ce que** l'on procède à la séparation de la fraction de crème dans un échangeur de chaleur à plaques auquel est raccordé un séparateur.

3. Le procédé selon au moins l'une des revendications 1 à 2, **caractérisé en ce que** l'on utilise une membrane céramique.

4. Le procédé selon au moins l'une des revendications 1 à 3, **caractérisé en ce que** l'on ajoute au rétentat R1 une quantité de crème telle que le produit final présente 2 à 12 % en poids de matière sèche non grasse et entre 3 et 5 % en poids et notamment environ 4 % en poids de matière grasse dans la matière sèche.

5. Le procédé selon au moins l'une des revendications 1 à 4, **caractérisé en ce que** l'on concentre le produit de manière à obtenir environ 15 à environ 25% en poids de matière sèche non grasse.

6. Le procédé selon au moins l'une des revendications 1 à 5, **caractérisé en ce que** l'on ajoute le tampon en des quantités d'environ 0,01 à environ 0,5 % en poids chacune.

7. Le procédé selon au moins l'une des revendications 1 à 6, **caractérisé en ce que** l'on chauffe les homogénéisâtes à une température de 120 à 125 °C pendant une durée d'environ 1 à environ 7 minutes, tout en les pasteurisant.

8. Le procédé selon au moins l'une des revendications 1 à 7, **caractérisé en ce que** l'on conditionne le lait concentré de manière stérile après la pasteurisation et que l'on chauffe éventuellement une nouvelle fois le produit conditionné.

9. Le procédé selon au moins l'une des revendications 1 à 8, **caractérisé en ce qu'**on le met en oeuvre par lots ou en tout ou partie en continu.
